(19) Europäisches Patentamt
European Patent Office
Office européen des brevets

(11) **EP 2 028 451 B1**

(12) **EUROPÄISCHE PATENTSCHRIFT**

(45) Veröffentlichungstag und Bekanntmachung des Hinweises auf die Patenterteilung:
**10.12.2014 Patentblatt 2014/50**

(51) Int Cl.:
***G01D 5/22*** *(2006.01)*      ***B60T 7/04*** *(2006.01)*

(21) Anmeldenummer: **08014754.9**

(22) Anmeldetag: **20.08.2008**

(54) **Induktive Sensoreinrichtung mit stufenförmigem Spulenkern**

Inductive sensor assembly with a step-shaped coil core

Détecteur inductif avec un noyaux de bobine à la forme d'étapes

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.08.2007 DE 102007040058**

(43) Veröffentlichungstag der Anmeldung:
**25.02.2009 Patentblatt 2009/09**

(73) Patentinhaber: **KNORR-BREMSE Systeme für Nutzfahrzeuge GmbH 80809 München (DE)**

(72) Erfinder: **Feucht, Thomas 71299 Wimsheim (DE)**

(74) Vertreter: **Schönmann, Kurt Knorr-Bremse AG, Patentabteilung - V/RG, Moosacher Strasse 80 80809 München (DE)**

(56) Entgegenhaltungen:
**EP-A1- 0 795 738**      **EP-A2- 0 152 067**
**WO-A2-03/029753**      **US-A- 3 005 969**

**Beschreibung**

Die Erfindung geht aus von einer induktiven Sensoreinrichtung gemäß Anspruch 1.

Aus dem Stand der Technik sind sog. Tauchankeraufnehmer bekannt, bei welchen durch das Eintauchen von Weicheisenkernen in die Spule dem Magnetfluss ein geringerer Widerstand entgegengesetzt wird, wodurch sich die Induktivität der Spule messbar erhöht. Dabei ist der Weicheisenkern meist glattzylindrisch ausgebildet. Die Baulänge solcher Tauchankeraufnehmer überschreitet jedoch den Messweg in der Regel erheblich.

Eine induktive Sensoreinrichtung ist aus der DE 43 30 540 C1 bekannt. Dort ist ein die Spule tragender Spulenkörper rechteckförmig ausgebildet und weist in seinem Zentrum einen schlitzförmigen Durchbruch auf, in welchen eine als Spulenkern fungierende, exzentrische drehbar gelagerte Platte von außen her eintauchbar ist. Nachteilig bei dieser Ausführung ist jedoch auch der relativ hohe Platzbedarf.

Eine typische Anwendung solcher induktiver Wegaufnehmer stellt die Messung des Pedalwegs bzw. Pedaldrehwinkels eines Kraftfahrzeugpedals dar, insbesondere eines Nutzfahrzeugpedals, insbesondere eines Nutzfahrzeugbremspedals in einem Fußbremsmodul eines elektronischen Bremssystems. Abhängig von der Drehstellung bzw. von dem Betätigungsweg des Fußpedals wird in einer mikroprozessorbasierten Auswerteeinrichtung ein Sollwertsignal für die Bremskraft bzw. den Bremsdruck erzeugt, welches von einem Bremssteuergerät verarbeitet wird, das daraus Stellsignale für nachgeordnete Druckregelmodule generiert. Analoges gilt auch für das Gas- und das Kupplungspedal bei elektrischer Ansteuerung der entsprechenden Aktuatoren.

Da der Bauraum im Bereich solcher Fußpedalmodule in der Regel sehr eingeschränkt ist, sind Platz sparende Lösungen wünschenswert. Würde man jedoch zur Reduzierung des Platzbedarfs lediglich die Länge der Spulenkerne verkürzen, so ergäbe sich ein kürzerer Messweg und damit eine geringe Auflösung bzw. eine geringere Empfindlichkeit einer solchen induktiven Sensoreinrichtung, was im Hinblick auf die Dosierbarkeit der jeweils betätigten Funktion (Gas, Bremse, Kupplung) nicht wünschenswert erscheint.

Weiterhin wird gerade bei solchen Fußpedalmoduln eine hohe Ausfallsicherheit gefordert, weil sicherheitsrelevante Funktionen wie die der Bremse betroffen sind.

Bei einer induktiven Sensoreinrichtung gemäß der bisher unveröffentlichten DE 10 2006 057 917 weist der Spulenkern einen Abschnitt auf, welcher sich ausgehend einem einerseits angrenzenden Abschnitt konstanten Querschnitts in Spulenkernlängsrichtung gesehen stufenweise oder stetig bis zu einem andererseits angrenzenden Abschnitt konstanten Querschnitts verjüngt. Mit einer solchen Ausführung ist wegen des sich stärker ändernden Anteils des vom Magnetfeld erfassten Volumens des Spulenkerns eine kürzere Baulänge möglich. Darüber hinaus weist diese induktive Sensoreinrichtung zwei hintereinander geschaltete Spulen als Redundanz auf. Eine solche kontinuierliche Querschnittsverjüngung des Spulenkernquerschnitts ist jedoch vergleichsweise aufwändig in der Herstellung.

Eine gattungsgemäße induktive Sensoreinrichtung ist beispielsweise aus der EP 0 152 067 A2 bekannt. Diese Schrift offenbart Induktive Sensoreinrichtung mit zumindest zwei, in Reihe hintereinander angeordneten elektrischen Spulen, wobei ein entsprechend einem zu messenden Weg oder Winkel verstellbarer, mit einem Eintauchstück in die Spulen eintauchender Spulenkern vorgesehen ist, wobei das Eintauchstück des Spulenkerns einen Abschnitt mit gegenüber den beiden angrenzenden Abschnitten stufenartig vergrößertem oder stufenartig verkleinertem Querschnitt aufweist, wobei in einer Grundstellung des Spulenkerns sich der Abschnitt mit dem stufenartig vergrößerten oder stufenartig verkleinerten Querschnitt mit der einen Spule und einer der beiden angrenzenden Abschnitte mit der anderen Spule überdeckt und in einer von der Grundstellung abweichenden Stellung des Spulenkerns der Abschnitt mit dem stufenartig vergrößerten oder stufenartig verkleinerten Querschnitt mit einem Teil der anderen Spule und der andere der beiden angrenzenden Abschnitte mit einem Teil der einen Spule in

Überdeckung gerät. Weitere gattungsgemäße induktive Sensoreinrichtungen sind aus EP 0795 738 A1, US 3 005 969 A oder WO 03/029753 A2 bekannt.

Der Erfindung liegt demgegenüber die Aufgabe zugrunde, eine induktive Sensoreinrichtung der eingangs erwähnten Art derart weiter zu bilden, dass sie bei kleinerem Bauraum und größerem Messweg kostengünstig herstellbar ist. Weiterhin soll sie auch eine hohe Ausfallsicherheit aufweisen.

Erfindungsgemäß wird diese Aufgabe durch die Merkmale des Patentanspruchs 1 gelöst.

Offenbarung der Erfindung

Gemäß Anspruch 1 ist vorgesehen, dass

a) das Eintauchstück des Spulenkerns einen Abschnitt mit gegenüber den beiden angrenzenden Abschnitten stufenartig vergrößertem oder stufenartig verkleinertem Querschnitt aufweist, wobei
b) in einer Grundstellung des Spulenkerns sich der Abschnitt mit dem stufenartig vergrößerten oder stufenartig verkleinerten Querschnitt mit der einen Spule und einer der beiden angrenzenden Abschnitte mit der anderen Spule überdeckt und
c) in einer von der Grundstellung abweichenden Stellung des Spulenkerns der Abschnitt mit dem stufenartig vergrößerten oder stufenartig verkleinerten Querschnitt mit einem Teil der anderen Spule und der andere der beiden angrenzenden Abschnitte mit einem Teil der einen Spule in Überdeckung gerät.

Wegen der stufenartigen und wechselweisen Querschnittsvergrößerung oder Querschnittsverkleinerung des Eintauchstücks des Spulenkerns wird abhängig von der Eintauchtiefe des Spulenkerns in die Spule ein sich stark ändernder Anteil des Volumens des Spulenkerns vom Magnetfeld der Spulen erfasst. Dies resultiert in vorteilhafter Weise in einem großen Messweg und in einer hohen Auflösung und Empfindlichkeit. Demzufolge ist eine kurze Baulänge der Spule und des Spulenkerns möglich, wodurch sich der Bauraumbedarf der induktiven Sensoreinrichtung reduziert und eine Anwendung als Weg- oder Winkelsensor bei Fußpedalen in Fahrzeugen besonders vorteilhaft ist.

Wegen der kurzen Spulenbaulänge können insbesondere mehrere Spulen in Reihe hintereinander angeordnet werden, von welchen wenigstens eine Spule eine bezüglich einer anderen Spule redundante Spule darstellt. Damit ist die Funktion der induktiven Sensoreinrichtung auch dann gewährleistet, wenn die andere Spule ausfällt. Dies ist insbesondere bei sicherheitsrelevanten Anwendungen wesentlich, beispielsweise bei einer induktiven Sensoreinrichtung eines Bremspedals, bei welcher das Messsignal die Basis für die Bremsbetätigung bildet.

Um eine für eine Messung ausreichende Empfindlichkeit und Linearität zu erhalten, bildet eine Voraussetzung, dass der Spulenkörper in ausreichendem Maße von den Feldlinien des Magnetfelds erfasst wird, was der Fachmann durch eine geeignete Anpassung der Geometrien und Spulenwindungen etc. festlegt.

Wesentlich ist aber auch, dass eine gestufte Querschnittsänderung des Eintauchstücks des Spulenkerns sehr einfach herzustellen ist. Insbesondere kann mit einer induktiven Sensoreinrichtung gemäß der Erfindung ein analoges oder auch ein digitales Ausgangssignal erzeugt werden, da die Querschnittsänderungen der Abschnitte stufenartig und wechselweise, d.h. großer Querschnitt/kleiner Querschnitt im Wechsel erfolgen, bei vorzugsweise jeweils identischen Querschnittsabmessungen beim kleinen Querschnitt und beim großen Querschnitt.

Erfindungsgemäß ist vorgesehen, dass der Querschnitt des Abschnitts mit dem stufenartig vergrößerten oder stufenartig verkleinerten Querschnitt zylindrisch und der angrenzende Abschnitt quadratisch, rechteckig oder polygon ausgebildet ist.

Durch die in den Unteransprüchen aufgeführten Maßnahmen sind vorteilhafte Weiterbildungen und Verbesserungen der im unabhängigen Anspruch angegebenen Erfindung möglich.

Ausführungsbeispiele der Erfindung sind in der Zeichnung dargestellt und in der nachfolgenden Beschreibung näher erläutert. In der Zeichnung zeigt

Fig.1    eine Querschnittsdarstellung einer induktiven Sensoreinrichtung gemäß einer bevorzugten Ausführungsform der Erfindung;

Fig.2    eine Querschnittsdarstellung einer induktiven Sensoreinrichtung gemäß einer weiteren Ausführungsform der Erfindung.

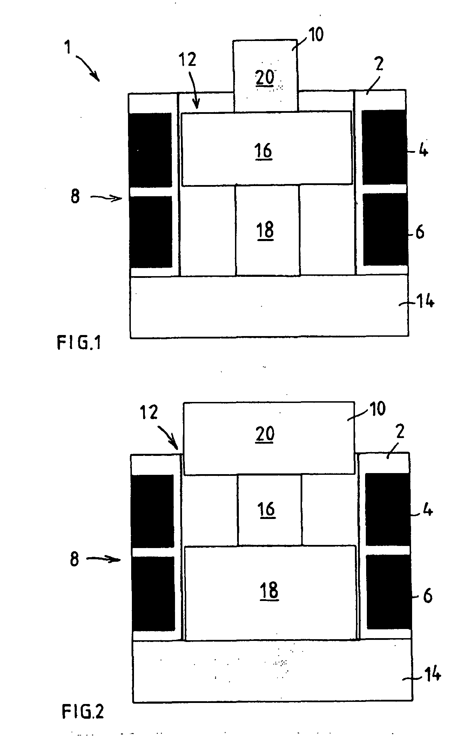

In Fig.1 ist ein Ausführungsbeispiel einer induktiven Sensoreinrichtung 1 gezeigt. Das Messprinzip beruht dabei auf der Messung der Änderung der Induktivität wenigstens zweier einer auf einen Spulenkörper 2 gewickelten elektrischen Spulen 4, 6 durch das Einbringen eines Eintauchstücks 8 eines Spulenkerns 10 in eine zentrale Spulenkörperöffnung 12 des Spulenkörpers 2 und damit in die Feldlinien des von ihnen erzeugten magnetischen Felds. Dabei durchragt das Eintauchstück 8 des Spulenkerns 10 die Spulenkörperöffnung 12 vollständig. Neben dem Eintauchstück 8 hat der Spulenkern 10 einen im Durchmesser die Stirnfläche des Spulenkörpers 2 übergreifendes Kopfstück 14, welches das Eintauchstück 8 abschließt und zugleich als Längsanschlag für den Spulenkern 10 am Spulenkörper 2 dient. Die Spulen 4, 6 sind in Axial- oder Längsrichtung gesehen auf dem Spulenkörper 2 hintereinander oder in Reihe angeordnet.

Die Induktivität einer solchen Spule 4, 6 berechnet sich nach Gleichung (1) wie folgt:

$$L = \frac{N^2 \cdot \mu \cdot A}{s} \qquad (1)$$

wobei

N       die Windungszahl der Spule 4, 6
s       die Weglänge der magnetischen Feldlinien,
A       die von den magnetischen Feldlinien durchsetzte Fläche,
μ       die Permeabilität des Materials des Spulenkerns 10 ist.

Die Induktivität kann daher durch das Einbringen von Materialien unterschiedlicher Permeabilität in den magnetischen Kreis verändert werden. Dabei wird das den Spulen 4, 6 zugeordnete, in der Spulenkörperöffnung 12 angeordnete Eintauchstück 8 des Spulenkerns 6 in dieser linear verschoben. Vorzugsweise besteht wenigstens das Eintauchstück 8 des der Spulenkerns 10 aus einem ferromagnetischen Material oder aus Aluminium.

Eine Änderung der Induktivität der Spulen 4, 6 als Maß für eine Änderung eines Weges oder Winkels wird dann dadurch erzielt, dass der Spulenkern 10 mit einem Objekt, dessen Drehlage bzw. Wegposition gemessen werden soll, derart zusammenwirkt, dass bei Änderung der Drehlage bzw. der Wegposition des Objekts ein unterschiedlicher Anteil des Volumens des Eintauchstücks 8 des Spulenkerns 10 vom Magnetfeld erfasst wird. Dies bedeutet, dass durch eine Änderung der axialen Lage des Spulenkerns 10 relativ zu den Spulen 4, 6 eine Änderung der Induktivität der Spulen 4, 6 als Maß für eine Änderung der Drehlage bzw. der Wegposition des Objekts hervorgerufen wird. Die Permeabilität von ferromagnetischen Materialien wie Eisen, Kobalt oder Nickel ist wesentlich größer als 1, so dass das magnetische Feld erheblich gestärkt wird, wenn ein solcher Spulenkern 10 von den magnetischen Feldlinien erfasst wird.

Bei dem bevorzugten Ausführungsbeispiel beinhaltet das Eintauchstück 8 des Spulenkerns 10 einen Abschnitt 16, welcher gegenüber den beiden an ihn unmittelbar angrenzenden Abschnitten 18, 20 einen stufenartig vergrößerten Querschnitt aufweist. In der in Fig.1 gezeigten Grundstellung oder auch Nulllage des Spulenkerns 10, welche sich durch keine Betätigung oder Bewegung des Objekts auszeichnet, überdeckt sich der Abschnitt 16 mit dem stufenartig vergrößerten Querschnitt mit der einen Spule 4 und einer der beiden an diesen Abschnitt 16 mit vergrößertem Querschnitt angrenzenden Abschnitte, nämlich der Abschnitt 18 mit einem demgegenüber kleineren Querschnitt mit der anderen Spule 6.

Vorzugsweise weisen die beiden an den Abschnitt 16 mit vergrößertem Querschnitt angrenzenden Abschnitte 18, 20 des Eintauchstücks 8 den gleichen demgegenüber kleineren Durchmesser auf. Sie könnten aber auch unterschiedliche Durchmesser haben.

Wie leicht vorstellbar ist, gerät In einer von der Grundstellung abweichenden Stellung des Spulenkerns 10, beispielsweise in einer gegenüber Fig.1 nach unten verschobenen Lage des Spulenkerns 10, der Abschnitt 16 mit dem stufenartig vergrößerten Querschnitt mit einem Teil der anderen Spule 6 und der Abschnitt 20 mit kleinerem Querschnitt mit einem Teil der einen Spule 4 in Überdeckung.

Vorzugsweise sind der Abschnitt 16 mit dem stufenartig vergrößerten Querschnitt sowie die beiden angrenzenden Abschnitte 18, 20 in Längs- oder Axialrichtung des Spulenkörpers 2 gesehen im wesentlichen gleich lang wie die Spulen 4, 6, welche ebenfalls vorzugsweise gleich lang sind.

Sämtliche Abschnitte 16, 18, 20 des Eintauchstücks 8 des Spulenkerns 10 sind vorzugsweise zylindrisch ausgebildet. Dann basieren die unterschiedlichen Querschnitte der Abschnitte 16, 18, 20 des Eintauchstücks 8 auf einem jeweils unterschiedlichen Durchmesser. Die unterschiedlichen Querschnitte des Eintauchstücks 8 können aber auch daher rühren, dass ein Abschnitt 16, 18, oder 20 zylindrisch und der angrenzende Abschnitt 16, 18 oder 20 quadratisch, rechteckig oder polygon ausgebildet ist.

Eine Änderung der Induktivität der Spulen 4, 6 tritt ein, wenn sich der innerhalb der Spulenkörperöffnung 8 im Bereich einer Spule 4, 6 befindliche Querschnitt des Eintauchstücks 8 des Spulenkerns 10 durch eine axiale Linearbewegung des Spulenkerns 10 ändert. Dies ist immer dann der Fall, wenn sich der Längenanteil des Abschnitts 16 mit größerem Querschnitts oder eines Abschnitts 18, 20 mit kleinerem Querschnitt im Überdeckungsbereich mit einer Spule 4, 6 vergrößert oder verkleinert, während sich noch ein Abschnitt mit jeweils kleinerem oder größerem Querschnitt im Überdeckungsbereich befindet. Weiterhin ist dies auch der Fall, wenn sich der Querschnitt des Eintauchstücks 8 beim Eintritt in den Überdeckungsbereich mit einer der Spulen 4, 6 durch seine stufenförmige Ausbildung schlagartig ändert. Diese stufenartige Ausbildung des Eintauchstücks 8 eignet sich insbesondere zur Erzeugung digitaler Signale, wobei ein Abschnitt 18, 20 beispielsweise das Signal "0" und ein Abschnitt 16 mit größerem Querschnitt das Signal "1" liefert. Generell können daher Abschnitte mit größerem und kleinerem Durchmesser wechselweise auf dem Eintauchstück angeordnet und jeder dieser Abschnitte einer separaten Spule zugeordnet werden. Daher ist die Anzahl der Spulen 4, 6 nicht auf zwei begrenzt; genauso können auch mehr als drei Abschnitte 16, 18, 20 auf dem Eintauchstück 8 des Spulenkerns 10 ausgebildet sein.

Das Signal in Form der Induktivitätsänderung wird in einer nicht gezeigten Auswerteelektronik ausgewertet und kann als Analog- oder Digitalsignal in einem Steuergerät weiter verarbeitet werden. Besonders bevorzugt ist die induktive Sensoreinrichtung 1 zur Messung einer Pedalstellung eines Fahrzeugpedals eines Fahrzeugs vorgesehen, beispielsweise eines Bremspedals. Von den wenigstens zwei Spulen 4, 6, welche in Reihe hintereinander angeordnet sind, ist wenigstens eine Spule 6 eine bezüglich einer anderen Spule 4 redundante Spule. Damit ist die Funktion der induktiven Sensoreinrichtung 1 auch dann gewährleistet, wenn die andere Spule 4 ausfällt.

Bei einer in Fig.2 gezeigten weiteren Ausführungsform der Erfindung sind die demgegenüber dem vorangehend beschriebenen Ausführungsbeispiel identischen oder analogen Bauteile und Baugruppen mit den gleichen Bezugszeichen gekennzeichnet. Gegenüber dem vorangehenden Beispiel weist der Abschnitt 16 des Eintauchstücks 8 des Spulenkerns 10 jedoch einen gegenüber den beiden angrenzenden Abschnitten 18, 20 stufenartig verkleinerten Querschnitt auf.

In der in Fig.2 gezeigten Grundstellung oder auch Nulllage des Spulenkerns 10, welche sich durch keine Betätigung oder Bewegung des Objekts auszeichnet, überdeckt sich der Abschnitt 16 mit dem stufenartig verkleinerten Querschnitt mit der einen Spule 4 und der an diesen Abschnitt 16 angrenzende Abschnitt 18 mit demgegenüber größerem Querschnitt mit der anderen Spule 6.

Vorzugsweise weisen die beiden an den Abschnitt 16 mit verkleinertem Querschnitt angrenzenden Abschnitte 18, 20 des Eintauchstücks 8 den gleichen demgegenüber größeren Durchmesser auf. Sie könnten aber auch unterschiedliche Durchmesser haben.

Ebenso wie beim vorangehenden Beispiel sind der Abschnitt 16 mit dem stufenartig verkleinerten Querschnitt sowie die beiden angrenzenden Abschnitte 18, 20 mit größerem Querschnitt in Längs- oder Axialrichtung des Spulenkörpers 2 gesehen im wesentlichen gleich lang wie eine der beiden Spulen 4, 6, welche ebenfalls vorzugsweise gleich lang sind. Bezüglich der Funktionsweise dieses Ausführungsbeispiels wird auf die Beschreibung des vorangehenden Ausführungsbeispiels verwiesen.

Je nach Ausführung des Eintauchstücks 8 gemäß Fig.1 oder Fig.2 können bei einer Bewegung des Spulenkerns 10 daher gleichläufige oder gegenläufige Induktivitätsänderungen der Spulen 4, 6 erzeugt werden.

## Bezugszahlenliste

| | |
|---|---|
| 1 | Sensoreinrichtung |
| 2 | Spulenkörper |
| 4 | Spule |
| 6 | Spule |
| 8 | Eintauchstück |
| 10 | Spulenkern |
| 12 | Spulenkörperöffnung |
| 14 | Kopfstück |
| 16 | Abschnitt |
| 18 | Abschnitt |
| 20 | Abschnitt |

## Patentansprüche

1. Induktive Sensoreinrichtung (1) mit zumindest zwei, in Reihe hintereinander angeordneten elektrischen Spulen (4, 6), wobei ein entsprechend einem zu messenden Weg oder Winkel verstellbarer, mit einem Eintauchstück (8) in die Spulen (4, 6) eintauchender Spulenkern (10) vorgesehen ist, wobei

   a) das Eintauchstück (8) des Spulenkerns (10) einen Abschnitt (16) mit gegenüber den beiden angrenzenden Abschnitten (18, 20) stufenartig vergrößertem oder stufenartig verkleinertem Querschnitt aufweist, wobei
   b) in einer Grundstellung des Spulenkerns (10) sich der Abschnitt (16) mit dem stufenartig vergrößerten oder stufenartig verkleinerten Querschnitt mit der einen Spule (4) und einer der beiden angrenzenden Abschnitte (18, 20) mit der anderen Spule (6) überdeckt und
   c) in einer von der Grundstellung abweichenden Stellung des Spulenkerns (10) der Abschnitt (16) mit dem stufenartig vergrößerten oder stufenartig verkleinerten Querschnitt mit einem Teil der anderen Spule (6) und der andere der beiden angrenzenden Abschnitte (18, 20) mit einem Teil der einen Spule (4) in Überdeckung gerät, wobei
   d) der Querschnitt des Abschnitts (16) mit dem stufenartig vergrößerten oder stufenartig verkleinerten Querschnitt zylindrisch und der angrenzende Abschnitt (18, 20) quadratisch, rechteckig oder polygon ausgebildet ist.

2. Induktive Sensoreinrichtung nach Anspruch 1, wobei die Abschnitte (16, 80, 20) des Eintauchstücks (8) des Spulenkerns (10) zylindrisch ausgebildet sind.

3. Induktive Sensoreinrichtung nach wenigstens einem der vorhergehenden Ansprüche, wobei sie zur Messung einer Pedalstellung eines Fahrzeugpedals eines Fahrzeugs vorgesehen ist.

4. Induktive Sensoreinrichtung nach wenigstens einem der vorhergehenden Ansprüche, wobei zumindest das Eintauchstück (8) des Spulenkerns (10) aus einem ferromagnetischem Material oder aus Aluminium besteht.

## Claims

1. Inductive sensor assembly (1) with at least two electric coils (4, 6) connected in series, with a coil core (10) being provided that is adjustable in correspondence with a distance or angle to be measured and plunging by a plunger piece (8) into said coils (4, 6), wherein

   (a) said plunger piece (8) of said coil core (10) comprises a section (16) with a cross-section enlarged in a step-like form or reduced in a step-like form relative to the two adjacent sections, wherein
   (b) in a basic position of said coil core (10) said section (16) provided with said cross-section enlarged in a step-like form or reduced in a step-like form covers one (4) of said coils whilst one of the two adjacent sections (18, 20) covers said other coil (6), and
   (c) in a position of said coil core (10) at variance from the basic position, said section (16) provided with said cross-section enlarged in a step-like form or reduced in a step-like form is caused to cover one part of said other coil (6) whilst the other one of the two adjacent sections (18, 20) is caused to cover one part of said first coil (4), wherein
   (d) the cross-section of said section (16) provided with said cross-section enlarged in a step-like form or reduced in a step-like form has a cylindrical configuration whereas the adjacent section (18, 20) has a square, rectangular or polygon configuration.

2. Inductive sensor assembly according to Claim 1, wherein said sections (16, 80, 20) of said plunger piece (8) of said coil core (10) have a cylindrical configuration.

3. Inductive sensor assembly according to at least one of the preceding Claims, wherein it is provided for measuring the pedal position of a vehicle pedal in a vehicle.

4. Inductive sensor assembly according to at least one of the preceding Claims, wherein at least said plunger piece (8) of said coil core (10) consists of a ferromagnetic material or of aluminium.


**Revendications**

1. Montage à détecteur inductif (1) à au moins deux bobines électriques (4, 6) reliées en série, à un noyau de bobine (10) étant disposé, qui est ajustable en correspondance avec une distance ou un angle à mesurer, et plongeant par une pièce plongeante (8) dans lesdites bobines (4, 6), dans lequel

> (a) ladite pièce plongeante (8) dudit noyau de bobine (10) comprend une partie (16) à une section agrandie de manière de marche d'escalier ou réduite de manière de marche d'escalier relative aux deux parties adjacentes, dans lequel
> (b) en une position de base dudit noyau de bobine (10), ladite partie (16) pourvue de ladite section agrandie de manière de marche d'escalier ou réduite de manière de marche d'escalier recouvre une (4) desdites bobines, pendant qu'une dex deux parties adjacentes (18, 20) recouvre l'autre bobine (6), et
> (c) en une position dudit noyau de bobine (10) autre que la position de base, ladite partie (16) pourvue de ladite section agrandie de manière de marche d'escalier ou réduite de manière de marche d'escalier est portée en une position recouvrant une partie de ladite autre bobine (6) pendant que l'autre dex deux parties adjacentes (18, 20) est portée en une position recouvrant une partie de ladite première bobine (4), dans lequel
> (d) la section de ladite partie (16) pourvue d'une section agrandie de manière de marche d'escalier ou réduite de manière de marche d'escalier présente une configuration cylindrique, pendant que la partie adjacente (18, 20) a une configuration carrée, rectangulaire ou polygone.

2. Montage à détecteur inductif selon la revendication 1, dans lequel lesdites parties (16, 80, 20) de ladite pièce plongeante (8) dudit noyau de bobine (10) présentent une configuration cylindrique.

3. Montage à détecteur inductif selon au moins une des revendications précédentes, dans lequel il est disposé pour le mesurage de la position de pédale d'une pédale d'un véhicule dans un véhicule.

4. Montage à détecteur inductif selon au moins une des revendications précédentes, dans lequel au moins ladite pièce plongeante (8) dudit noyau de bobine (10) consiste en un matériau ferromagnétique ou en aluminium.

FIG.1

FIG.2

**EP 2 028 451 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4330540 C1
- DE 102006057917
- EP 0152067 A2
- EP 0795738 A1
- US 3005969 A
- WO 03029753 A2